(19) Europäisches Patentamt
European Patent Office
Office européen des brevets

(11) EP 3 959 275 B1

(12) **EUROPEAN PATENT SPECIFICATION**

(45) Date of publication and mention of the grant of the patent:
**05.08.2026 Bulletin 2026/32**

(21) Application number: **20742954.9**

(22) Date of filing: **03.07.2020**

(51) International Patent Classification (IPC):
***C09D 11/322*** *(2014.01)* ***C09B 67/22*** *(2006.01)*

(52) Cooperative Patent Classification (CPC):
**C09D 11/322; C09B 67/0034; C09B 67/0046**

(86) International application number:
**PCT/JP2020/026155**

(87) International publication number:
**WO 2021/010187 (21.01.2021 Gazette 2021/03)**

(54) **WATER-BASED INK FOR INK-JET RECORDING AND INK SET**

WASSERBASIERTE TINTE FÜR TINTENSTRAHLAUFZEICHNUNG UND TINTENSATZ

ENCRE À BASE D'EAU POUR IMPRESSION À JET D'ENCRE ET ENSEMBLE D'ENCRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2019 JP 2019130460**

(43) Date of publication of application:
**02.03.2022 Bulletin 2022/09**

(73) Proprietor: **Brother Kogyo Kabushiki Kaisha**
**Aichi 467-8561 (JP)**

(72) Inventors:
- **MAEDA, Mitsunori**
  **Nagoya-shi, Aichi 467-8562 (JP)**
- **TSUZAKA, Yuka**
  **Nagoya-shi, Aichi 467-8562 (JP)**
- **YUHARA, Keisuke**
  **Nagoya-shi, Aichi 467-8561 (JP)**

(74) Representative: **Prüfer & Partner mbB**
**Patentanwälte · Rechtsanwälte**
**Sohnckestraße 12**
**81479 München (DE)**

(56) References cited:
**WO-A1-2015/187143**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 959 275 B1

## Description

[Technical Field]

The present invention relates to a water-based ink for ink-jet recording and an ink set.

[Background Art]

WO 2015/187143 A1 discloses a magenta pigment blend being a first pigment including a solid solution of Pigment Violet 19 and Pigment Red 122, or Pigment Red 282; and a second pigment including Pigment Red 150. The weight ratio of the first pigment to the second pigment can be from 50:50 to 80:20 by pigment solids content.

Conventionally, as water-based inks for ink-jet recording, there are known inks including pigments of three primary colors which are yellow, cyan and magenta, respectively. Further, it is known for example that, in order to improve the coloring (color development) of each of these inks, to use a solid solution containing two or more kinds of pigments to thereby improve the characteristic of the ink (see JP 2018-150515 A (Patent Literature 1)).

[Summary]

[Technical Problem]

In the recent years, there is an ever increasing demand for a wide color reproducing range in the magenta ink of which impact on the visibility is particularly high among the three primary colors.

In the conventional magenta ink, however, not all the color gamut (color range) in a region from magenta to red, the balance in the color gamut from a light (bright) portion to a dark portion in the chromaticness of magenta, and the light resistance are satisfactory.

In view of the above situation, an object of the present invention is to provide a water-based ink for ink-jet recording in which all the color gamut (color range) in the region from magenta to red, the balance in the color gamut from a light portion to a dark portion in the chromaticness of magenta, and the light resistance are satisfactory.

[Solution to the Problem]

The object of the present invention is achieved by the water-based ink for ink-jet recording as defined by claim 1 and the ink set as defined by claim 8.

[Effect of the invention]

Since the water-based ink for ink-jet recording related to the present invention uses the solid solution which contains C.I. Pigment Violet 19 and C.I. Pigment Red 122 in combination with C.I. Pigment Red 176, the water-based ink for ink-jet recording related to the present invention is satisfactory in all the color gamut (color range) in the region from magenta to red, the balance in the color gamut from a light portion to a dark portion in the chromaticness of magenta, and the light resistance.

[Brief Description of Drawings]

[Fig. 1] Fig. 1 is a graph explaining a effect of the present invention, and a view indicating, in (b) evaluation of chromaticness of red in Examples, the color (chromaticity) of each of a plurality of images , in the L*a*b* color system chromaticity diagram indicating a* and b* on a plane, each of the plurality of images being recorded by using ink sets of Example 4, Comparative Examples 1 and 2, respectively, while changing the ratio between the number of dots of a water-based yellow ink and the number of dots of a water-based magenta ink.

[Fig. 2] Fig. 2 is a schematic perspective view depicting the configuration of an example of an ink-jet recording apparatus related to the present invention.

[Description of Embodiments]

In the present invention, the chromaticness (C*) is calculated, for example, by the following expression based on a* and b* which are based on the L*a*b* color system (CIE 1976 (L*a*b*) color system) normalized or standardized by

Commission Internationale d'Eclairage (CIE) in 1976 (see, JIS Z 8729).

$$C^* = \{(a^{*2}) + (b^{*2})\}^{1/2}$$

A water-based ink for ink-jet recording (hereinafter also referred to as a "water-based ink" or an "ink", in some cases) related to the present invention will be explained. The water-based ink related to the present invention includes a quinacridone pigment, an azo pigment and water.

The quinacridone pigment contains a solid solution containing C.I. Pigment Violet 19 (hereinafter referred to as "PV19" in some cases) and C.I. Pigment Red 122 (hereinafter referred to as "PR122" in some cases). In the present invention, the term "solid solution" means a pigment which is present as a mixed crystal of two or more kinds of pigment molecules (in a mixed crystallized state), and is different from being as simply mixing two or more kinds of pigments to each other. The solid solution may be a quinacridone pigment which contains at least PV19 and PR122; it is allowable that the solid solution contains a quinacridone pigment which is different from PV19 and PR 122 (hereinafter referred to as "another pigment"), or that the solid solution does not contain the another pigment. In a case that the solid solution contains the another pigment, the content ratio of the another pigment in the entire amount of the solid solution is, for example, smaller than the content amount of the solid solution in the entire amount of the water-based ink, and smaller than the content amount of the C.I. Pigment Red 176 in the entire amount of the water-based ink. the content ratio of the another pigment in the entire amount of the solid solution is, for example, less than 0.3% by mass, not more than 0.1% by mass, or 0% by mass. Further, it is allowable to use, as the solid solution containing PV19 and PR122, a commercially available product; or it is allowable to produce the solid solution containing PV19 and PR122 by a publicly known producing method.

A content amount (Q) of the quinacridone pigment in the entire amount of the water-based ink is, for example, in a range of 2% by mass to 10% by mass, in a range of 4% by mass to 8.5% by mass, in a range of 5% by mass to 8% by mass, or in a range of 5% by mass to 7% by mass.

The quinacridone pigment included in the water-based ink may be only the solid solution containing PV19 and PR122. Alternatively, the water-based ink may further contain a quinacridone pigment which is different from the solid solution containing the PV19 and PR122, in addition to the solid solution containing PV19 and PR122. In the water-based ink, the mass ratio of the solid solution containing PV19 and PR122 in the entire amount of the quinacridone pigment is, for example, not less than 50% by mass, not less than 70% by mass, or 100% by mass.

The azo pigment contains C.I. Pigment Red 176 (hereinafter referred to as "PR176" in some cases). C.I. Pigment Red 176 does not form solid solution with any other pigment, namely, C.I. Pigment Red 176 is a non-solid solution pigment dispersed in the water-based ink.

A content amount (A) of the azo pigment in the entire amount of the water-based ink is, for example, in a range of 0.1% by mass to 5% by mass, in a range of 0.2% by mass to 4% by mass, or in a range of 0.5% by mass to 3% by mass.

The azo pigment included in the water-based ink may be only PR176. Alternatively, the water-based ink may further contain an azo pigment which is different from PR176, in addition to PR176. In the water-based ink, the mass ratio of PR176 in the entire amount of the azo pigment is, for example, not less than 50% by mass, not less than 70% by mass, or 100% by mass.

Since the water-based ink uses, in combination, the solid solution which contains PV19 and PR122, and PR176, the water-based ink is satisfactory in (i) the color gamut in the region from magenta to red, (ii) the balance in the color gamut from a light portion to a dark portion in the chromaticness of magenta, and (iii) the light resistance.

With respect to Item (i), the region from magenta to red means the region from a hue angle which is approximately -40 degrees (magenta) to a hue angle which is approximately 40 degrees (red) in the L*a*b* color system chromaticity diagram indicating a* and b* on a plane (a*-b* plane). The phrase "the color gamut in the region from magenta to red is satisfactory" means that the color gamut, of an image formed by using the water-based ink related to the present invention, in the region from magenta to red in the a*-b* plane is located at a position at which the chromaticness is high (a position separate and away from the origin). This means the water-based ink of the present invention can achieve the wide color reproduction gamut from magenta to red.

The effect that the above-described color gamut of the water-based ink which uses the solid solution containing PV19 and PR122, in combination with PR176 is satisfactory exceeds the effect of a water-based ink which singly uses the solid solution containing PV19 and PR122 and the effect of a water-based ink which singly uses PV176. For example, it is appreciated, as indicated in Fig. 1, that Example 4 using a water-based ink which uses solid solution containing PV19 and PR122 in combination with PR176 (to be described later on) has a color gamut expanding up to such a region R having a higher chromaticness that cannot be covered by Comparative Example 1 using a water-based ink which uses only the solid solution containing PV19 and PR122 (to be described later on) and by Comparative Example 2 using a water-based ink which uses only PR176 (to be described later on).

With respect to Item (ii), the phrase "the balance in the color gamut from a light portion to a dark portion in the chromaticness of magenta is satisfactory" means that in the region of magenta, in the a*-b* plane, (in which the hue angle is

in a range of approximately -40 degrees to approximately 0 degrees), the color gamut having a high lightness (L*) and the color gamut having a low lightness (L*) of an image formed by using the water-based ink related to the present invention are both located at positions, respectively, at each of which the chromaticness is high (positions each of which is separate and away from the origin).

It is presumed that the water-based ink of the present invention achieves the above-described effects because intrinsic absorption peaks of PV19, PR122 and PR176 appropriately overlap. This mechanism, however, is merely a presumption, and the present invention is not limited to or restricted by this presumed mechanism.

Mass ratio (Q:A) of the content amount (Q) of the quinacridone pigment to the content amount (A) of the azo pigment in the entire amount of the water-based ink is, for example, in a range of Q:A = 95:5 to 50:50, in a range of Q:A = 90:10 to 60:40, or in a range of Q:A = 90:10 to 70:30. In a case that the mass ratio (Q:A) is made to be the range of Q:A = 90:10 to 60:40, it is possible to obtain a water-based ink which is further excellent in the balance between the magenta chromaticness and the red chromaticness; in a case that the mass ratio (Q:A) is made to be the range of Q:A = 90:10 to 70:30, it is possible to obtain a water-based ink which is further excellent in the magenta chromaticness.

A total (Q+A) of the content amount (Q) of the quinacridone pigment and the content amount (A) of the azo pigment in the entire amount of the water-based ink is, for example, in a range of 4% by mass to 9% by mass, in a range of 4.5% by mass to 9% by mass, in a range of 5% by mass to 8% by mass, or in a range of 6% by mass to 8% by mass. In a case that the total (Q+A) is made to be the range of 4.5% by mass to 9% by mass, it is possible to obtain a water-based ink which is further excellent in the magenta chromaticness in each lightness (brightness); in a case that the total (Q+A) is made to be the range of 5% by mass to 8% by mass, it is possible to obtain a water-based ink which is further excellent in the total of the magenta chromaticness and the red chromaticness, and further excellent in in the magenta chromaticness in each lightness (brightness); and in a case that the total (Q+A) is made to be the range of 6% by mass to 8% by mass, it is possible to obtain a water-based ink which is further excellent in the light resistance.

In the water-based ink, for example, the mean (average) particle diameter of the quinacridone pigment is greater than the mean (average) particle diameter of the azo pigment. By making the mean particle diameter of the quinacridone pigment to be greater than the mean particle diameter of the azo pigment, the quinacridone pigment having good light resistance tends to remain on a surface of the recording medium, and thus the water-based ink can be further excellent in the light resistance. The mean particle diameter can be measured as the arithmetic mean diameter. Further, the mean particle diameter can be measured, for example, by diluting the pigment so that a solid content amount thereof is 0.02% by mass, and by using a dynamic light scattering particle diameter distribution measuring apparatus "LB-550" (product name) produced by HORIBA, LTD., with the intensity of the scattered light as the reference for the particle diameter. Namely, the mean particle diameter may be a mean particle diameter (intensity mean particle diameter) which is calculated based on an intensity-based particle size distribution (light scattering intensity-based particle size distribution). The mean particle diameter of the quinacridone pigment is, for example, in a range of 1.01 times to 2 times, in a range of 1.02 times to 1.5 times, in a range of 1.05 times to 1.2 times, or 1.09 times the mean particle diameter of the azo pigment. The difference between the mean particle diameter of the quinacridone pigment and the mean particle diameter of the azo pigment is, for example, in a range of 1 nm to 100 nm, in a range of 1 nm to 50 nm, in a range of 5 nm to 20 nm, or 10 nm. The mean particle diameter of the quinacridone pigment is, for example, in a range of 50 nm to 200 nm, in a range of 80 nm to 150 nm, in a range of 100 nm to 140 nm, or 120 nm. The mean particle diameter of the azo pigment is, for example, in a range of 50 nm to 200 nm, in a range of 70 nm to 140 nm, in a range of 90 nm to 130 nm, or 110 nm.

It is allowable that the water-based ink further contain a pigment and/or a dye, etc., which are different from the quinacridone pigment and the azo pigment, in addition to the quinacridone pigment and the azo pigment, or that the water-based ink does not further contain a pigment and/or a dye, etc., which are different from the quinacridone pigment and the azo pigment.

The pigment usable for the water-based ink is exemplified, including the quinacridone pigment and the azo pigment, by: C. I. Pigment Reds 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 221, 222, 224 and 238; C. I. Pigment Violets 19 and 196; C. I. Pigment Yellows 1, 2, 3, 12, 13, 14, 15, 16, 17, 55, 73, 74, 75, 78, 83, 93, 94, 95, 97, 98, 114, 128, 129, 138, 150, 151, 154, 180, 185 and 194; C. I. Pigment Oranges 31 and 43; etc. Among the above-described pigments, the quinacridone pigment and the azo pigments are preferred.

The water-based ink may be a water-based ink in which the pigment is dispersed in water by a dispersant. As the dispersant, it is allowable to use, for example, a general polymeric dispersant (resin for dispersing pigment, or pigment-dispersing resin), etc. The pigment may be a self-dispersible pigment. The self-dispersible pigment is dispersible in water without using any dispersing agent, for example, owing to the fact that at least one of the hydrophilic group and the salt thereof including, for example, a carbonyl group, a hydroxyl group, a carboxylic acid group, a sulfonic acid group, a phosphate group, etc., is introduced into the surfaces of the pigment particles by the chemical bond directly or with any group intervening therebetween.

The water is preferably ion-exchanged water or pure water (purified water). The content amount of the water in the entire amount of the water-based ink is, for example, in a range of 10% by mass to 90% by mass or in a range of 20% by

mass to 80% by mass. The content amount of the water in the entire amount of the water-based ink may be, for example, a balance of the other components.

The water-based ink may further contain an acetylene glycol-based surfactant. The acetylene glycol-based surfactant is exemplified, for example, by a compound represented by the following formula (1), etc.

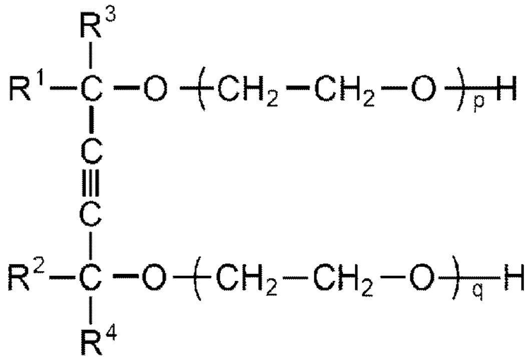

· · · (1)

In the formula (1), p and q may be identical to each other or different from each other; for example, p + q is a number satisfying p + q = 1 to 15, 3 to 11, or 4 to 10. In the formula (1), $R^1$, $R^2$, $R^3$ and $R^4$ may be identical with one another or different from one another, and each are a straight-chain or branched-chain alkyl group having 1 to 5 carbon atom(s).

It is allowable to use, for example, any commercially available product as the acetylene glycol-based surfactant. The commercially available product is exemplified, for example, by: "SURFYNOL (trade name) 440", and "SURFYNOL (trade name) 465", and "SURFYNOL (trade name) 485" which are produced by AIR PRODUCTS AND CHEMICALS, Inc.; "OLFIN (trade name) E1004", "OLFIN (trade name) E1008" and "OLFIN (trade name) E1010" which are produced by NISSHIN CHEMICAL CO., LTD.; "ACETYLENOL (trade name) E40" and "ACETYLENOL (trade name) E100" produced by KAWAKEN FINE CHEMICALS CO., LTD.; and the like.

The ratio of the content of the acetylenic glycol-based surfactant to a total of 100 parts by mass of the content of the quinacridone pigment and the content of the azo pigment is not less than 4 parts by mass, or 4 to 10 parts by mass. By making the ratio of the content of the acetylenic glycol-based surfactant within the above range, ink droplets are appropriately wet and spread on the surface of the recording medium, and thus an image quality is expected to be improved.

It is preferable that the water-based ink further contains another surfactant which is different from the acetylene glycol-based surfactant. From the viewpoint of the solubility of the acetylene glycol-based surfactant, it is preferred that the acetylene glycol-based surfactant is used in combination with the another surfactant. The another surfactant is exemplified, for example, by: nonionic surfactants of "EMULGEN (trade name)" series, "RHEODOL (trade name)" series, "EMASOL (trade name)" series, "EXCEL (trade name)" series, "EMANON (trade name)" series, "AMIET (trade name)" series, "AMINON (trade name)" series, etc., produced by KAO CORPORATION; nonionic surfactants of "SORBON (trade name)" series produced by TOHO CHEMICAL INDUSTRY CO., LTD.; nonionic surfactants of "DOBANOX (trade name)" series, "LEOCOL (trade name)" series, "LEOX (trade name)" series, "LAOL, LEOCON (trade name)" series, "LIONOL (trade name)" series, "CADENAX (trade name)" series, "LIONON (trade name)" series, "LEOFAT (trade name)" series, etc., produced by LION CORPORATION; anionic surfactants of "EMAL (trade name)" series, "LATEMUL (trade name)" series , "VENOL (trade name)" series, "NEOPELEX (trade name)" series, NS SOAP, KS SOAP, OS SOAP, and "PELEX (trade name)" series, etc., produced by KAO CORPORATION; anionic surfactants of "LIPOLAN (trade name)" series, "LIPON (trade name)" series, "SUNNOL (trade name)" series, "LIPOTAC (trade name)" series, "ENAGICOL (trade name)" series, "LIPAL (trade name)" series, and "LOTAT (trade name)" series, etc., produced by LION CORPORATION; cationic surfactants "KACHIOGEN (trade name) ES-OW" and "KACHIOGEN (trade name) ES-L" produced by DAI-ICHI KOGYO SEIYAKU CO., LTD., etc. It is allowable that only one kind of the another surfactant as described above is used singly, or two or more kinds of the another surfactant are used in combination.

The water-based ink may further contain a water-soluble organic solvent. The water-soluble organic solvent is exemplified, for example, by a humectant which prevents the ink from drying at an end of a nozzle in an ink-jet head, a penetrant which adjusts the drying velocity on a recording medium, etc.

The humectant is not particularly limited, and is exemplified, for example, by: lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols (ketone alcohols) such as diacetone alcohol; ethers such as tetrahydrofuran and dioxane; polyethers such as polyalkylene glycol; polyvalent alcohols such as alkylene glycol, glycerol, trimethylolpropane, trimethylolethane; 2-pyrrolidone; N-methyl-2-pyrrolidone; 1,3-dimethyl-2-imidazolidinone; and the like. The polyalkylene glycol is exemplified, for example, by polyethylene glycol,

polypropylene glycol, etc. The alkylene glycol is exemplified, for example, by ethylene glycol, propylene glycol, butylene glycol, diethylene glycol, triethylene glycol, dipropylene glycol, tripropylene glycol, thiodiglycol, hexylene glycol, etc. It is allowable that only one kind of the humectant as described above is used singly, or two or more kinds of the humectant are used in combination. Among the above-described humectants, it is preferable to use polyvalent alcohols such as alkylene glycol, glycerol, etc.

The content amount of the humectant in the entire amount of the water-based ink is, for example, in a range of 0% by mass to 95% by mass, in a range of 5% by mass to 80% by mass, or in a range of 5% by mass to 50% by mass.

The penetrant is exemplified, for example, by glycol ether. The glycol ether is exemplified, for example, by ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, etc. One kind of the penetrant may be used singly, or two or more kinds of the penetrant may be used in combination.

The content amount of the penetrant in the entire amount of the water-based ink is, for example, in a range of 0% by mass to 20% by mass, in a range of 0% by mass to 15% by mass, or in a range of 1% by mass to 6% by mass.

The water-based ink may further contain a conventionally known additive, as necessary. The additive includes, for example, pH-adjusting agents, viscosity-adjusting agents, surface tension-adjusting agents, fungicides, fixing agents for glossy paper, etc. The viscosity-adjusting agents include, for example, polyvinyl alcohol, cellulose, water-soluble resin, etc.

The water-based ink can be prepared, for example, such that the quinacridone pigment, the azo pigment, the water, and optionally other additive component(s) as necessary are mixed uniformly or homogeneously by any conventionally known method, and undissolved matters are removed by a filter or the like.

Next, an ink set related to the present invention will be explained.

The ink set related to the present invention includes a water-based magenta ink for ink-jet recording; and a water-based yellow ink for ink-jet recording, wherein the water-based magenta ink is the water-based ink for ink-jet recording related to the present invention; and the water-based yellow ink includes a yellow pigment and water.

The yellow pigment is exemplified, for example, by: C. I. Pigment Yellows 1, 2, 3, 12, 13, 14, 15, 16, 17, 55, 73, 74, 75, 78, 83, 93, 94, 95, 97, 98, 114, 128, 129, 138, 150, 151, 154, 180, 185, and 194; a solid solution of any one of these pigments; and the like. Those may be used alone or in a combination of two or more thereof. Among them, C.I. Pigment Yellow 74 is preferably used in view of improving the red chromaticness.

In the water-based yellow ink, the water is preferably ion-exchanged water or pure water (purified water). The content amount of the water in the entire amount of the water-based yellow ink may be, for example, in a range of 10% by mass to 90% by mass, or in a range of 20% by mass to 80% by mass. The content amount of the water may be, for example, the balance of the other components.

The water-based yellow ink may contain, as necessary, a surfactant, a water-soluble organic solvent, an additive, etc., which are similar to those in the water-based ink which is related to the present invention and which contains the quinacridone pigment and the azo pigment.

The water-based yellow ink can be prepared, for example, such that the yellow pigment, the water, and optionally other additive component(s) as necessary are mixed uniformly or homogeneously by any conventionally known method, and undissolved matters are removed by a filter or the like.

The ink set related to the present invention may further satisfy the following conditional expression. In a case that the following conditional expression is satisfied, it is possible to obtain an ink set which is further excellent in the chromaticness of red.

$$Y \leq (Q + A) + 2$$

wherein in the conditional expression,

Y: a content amount (% by mass) of the yellow pigment in the entire amount the water-based yellow ink; and

Q+A: a total (% by mass) of a content amount (Q) of the quinacridone pigment and a content amount (A) of the azo pigment in an entire amount of the water-based magenta ink.

Next, an ink-jet recording apparatus related to the present invention will be explained.

The ink-jet recording apparatus related to the present invention is characterized by including: an ink storing section and an ink discharging mechanism, wherein an ink stored in the in the ink storing section is discharged by the ink

discharging mechanism, and wherein the water-based ink for ink-jet recording related to the present invention is stored in the ink storing section.

Fig. 2 depicts an example of the configuration of the ink-jet recording apparatus related to the present invention. As depicted in Fig. 2, an ink-jet recording apparatus 1 includes, as main constitutive components, four ink cartridges 2, an ink jetting (discharging) mechanism (ink-jet head) 3, a head unit 4, a carriage 5, a driving unit 6, a platen roller 7, and a purge device 8.

Each of the four ink cartridges 2 contains one color ink of four color water-based inks which are water-based yellow, magenta, cyan, and black inks. For example, the water-based magenta ink is the water-based ink for ink-jet recording related to the present invention. Further, for example, the water-based yellow ink is the water-based yellow ink for ink-jet recording constructing the ink set related to the present invention. In this exemplary embodiment, a set of the four ink cartridges 2 are depicted. However, in place of this four-ink cartridge set, it is also allowable to use an integrated type ink cartridge in which the interior thereof is comparted so that a water-based yellow ink accommodating section, a water-based magenta ink accommodating section, a water-based cyan ink accommodating section, and a water-based black ink accommodating section are formed. As a main body of the ink cartridge, for example, any conventionally known main body of an ink cartridge may be used.

The ink-jet head 3 disposed on the head unit 4 performs recording on a recording medium P (for example, recording paper P or recording paper sheet P). The four ink cartridges 2 and the head unit 4 are provided or arranged on the carriage 5. The driving unit 6 reciprocates the carriage 5 in a linear direction. As the driving unit 6, it is possible to use, for example, a conventionally known driving unit (see, for example, Japanese Patent Application Laid-open No. 2008-246821 corresponding to United States Patent Application Publication No. US2008/0241398 A1). The platen roller 7 extends in the reciprocating direction of the carriage 5 and is arranged to face the ink-jet head 3.

The purge device 8 sucks or draws unsatisfactory ink (poor ink) which contains air bubbles, etc., accumulated or trapped in the inside of the ink-jet head 3. As the purge device 8, it is possible to use, for example, a conventionally known purge device (for example, see Japanese Patent Application Laid-open No. 2008-246821 corresponding to United States Patent Application Publication No. US2008/0241398 A1).

A wiper member 20 is provided on the purge device 8 at a position on the side of the platen roller 7 such that the wiper member 20 is adjacent to the purge device 8. The wiper member 20 is formed to have a spatula shape, and wipes a nozzle-formed surface of the ink-jet head 3 accompanying with the movement (reciprocating movement) of the carriage 5. In Fig. 2, a cap 18 is provided to cover a plurality of nozzles of the ink-jet head 3 which is returned to a reset position upon completion of recording, so as to prevent the water-based inks from drying.

In the ink-jet recording apparatus 1 of the present embodiment, the four ink cartridges 2 are provided, together with the head unit 4, on one carriage 5. However, the present invention is not limited to this. In the ink-jet recording apparatus 1, the respective four ink cartridges 2 may be provided on a carriage which is different (separate) from the carriage on which the head unit 4 is provided. Alternatively, the respective four ink cartridges 2 may be arranged and fixed inside the ink-jet recording apparatus 1, rather than being provided on the carriage 5. In such aspects, for example, the respective four ink cartridges 2 are connected to the head unit 4 provided on the carriage 5 with tubes, etc., and the water-based inks are supplied from the four ink cartridges 2 via the tubes, respectively, to the head unit 4. Further, in these aspects, it is allowable to use four ink bottles having a bottle shape, instead of using the four ink cartridges 2. In such a case, each of the ink bottles is preferably provided with an inlet port via which the ink is poured from the outside to the inside of each of the ink bottles.

Ink-jet recoding, with the use of the ink-jet recording apparatus 1, is performed, for example, as follows. At first, the recording paper P is supplied from a paper feed cassette (not depicted in the drawings) provided at a side portion or a lower portion of the ink-jet recording apparatus 1. The recording paper P is introduced into the space between the ink-jet head 3 and the platen roller 7. A predetermined recording is performed on the introduced recording paper P with the water-based ink(s) jetted or discharged from the ink-jet head 3. The recording paper P after having the recording performed thereon is discharged from the ink-jet recording apparatus 1. According to the present invention, it is possible to obtain a printed matter in which all the color gamut (color range) in the region from magenta to red, the balance in the color gamut from the light portion to the dark portion in the chromaticness of magenta, and the light resistance are satisfactory. A paper feeding mechanism and a paper discharging mechanism for the recording paper medium P are omitted from the illustration in Fig. 2.

The apparatus depicted in Fig. 2 adopts the serial type ink-jet head. However, the present invention is not limited to or restricted by this. The ink-jet recording apparatus may be an apparatus which adopts a line type ink-jet head.

**[Examples]**

Next, Examples of the present invention will be explained together with Comparative Examples. Note that the present invention is not limited to and restricted by Examples and Comparative Examples described below.

<Preparation of Aqueous Pigment Dispersions A to D>

Pure water (purified water) was added to 20% by mass of a pigment (a solid solution of PV19 and PR122) and 7% by mass of sodium hydroxide-neutralized product of styrene-acrylic acid copolymer (acid value: 175 mgKOH/g, molecular weight: 10000) so that the entire amount thereof was 100% by mass, followed by being agitated and mixed, and thus a mixture was obtained. The obtained mixture was placed in a wet sand mill charged with zirconia beads of which diameter was 0.3 mm, and was subjected to a dispersing process for 6 (six) hours. Afterwards, the zirconia beads were removed by a separator, and the mixture was filtrated through a cellulose acetate filter (pore size 3.0 μm). Thus, aqueous pigment dispersion (water pigment dispersion) A indicated in TABLE 2 and TABLE 3 was obtained. Note that the styrene-acrylic acid copolymer is a water-soluble polymer which is generally used as a dispersant for pigment (pigment dispersant). Further, aqueous pigment dispersions B to D indicated in TABLE 2 and TABLE 3 were obtained in a similar manner regarding the aqueous pigment dispersion A except for appropriately changing the kind of pigment, the component ratio and the duration time of dispersing process.

<Examples 1 to 13 and Comparative Examples 1 to 4>

Components, which were included in Ink Composition (TABLE 2 or TABLE 3) and which were different from the aqueous pigment dispersions A to D, were mixed uniformly or homogeneously; and thus an ink solvent was obtained. Subsequently, the obtained ink solvent was added to each of the aqueous pigment dispersions A to D, followed by being mixed uniformly, and thus a mixture was obtained. After that, the obtained mixture was filtrated through a cellulose acetate membrane filter (pore size 3.00 μm) produced by TOYO ROSHI KAISHA, LTD., and thus a water-based ink for ink jet recording of each of Examples 1 to 13 indicated in TABLE 2 and Comparative Examples 1 to 4 indicated in TABLE 3 was obtained.

With respect to the water-based inks of Examples 1 to 13 and Comparative Examples 1 to 4, respectively, (a) Evaluation of Chromaticness of Magenta, (b) Evaluation of Chromaticness of Red, (c) Evaluation of Total of Chromaticness of Magenta and Chromaticness of Red, (d) Evaluation of Chromaticness of Magenta in Each Lightness (brightness), and (e) Evaluation of Light Resistance were performed by the following methods.

(a) Evaluation of Chromaticness of Magenta

An ink-jet recording apparatus MFC-J6995CDW produced by BROTHER INDUSTRIES., LTD., was used so as to record an image by using each of the water-based inks of Examples 1 to 13 and Comparative Examples 1 to 4 on a recording medium ("Hammermill Fore (trade name) Multi-Purpose Paper" produced by INTERNATIONAL PAPER COMPANY, with recording duty of 100%. The values of chromaticness (C*) at 5 (five) locations in the image were measured by using a spectrophotometric colorimetry meter "SpectroEye" produced by X-RITE INC., the average value of the values of chromaticness (C*) at the five locations was obtained, and the chromaticness of magenta was evaluated based on the following evaluation criterion. Here, the magenta chromaticness means a chromaticness (C*) of the magenta color (hue angle: -40° to 0°). Note that in the present invention, the "recording duty" is defined, for example, by the following formula.

Recording duty (%) = Number of actually recorded dots / (vertical resolution x horizontal resolution) x 100

Number of actually recorded dots: number of actually recorded dots per unit area
Vertical resolution: vertical resolution per unit area
Horizontal resolution: horizontal resolution per unit area

<Criterion for Evaluation of Chromaticness of Magenta>

AA: The chromaticness (C*) was not less than 64.
A: The chromaticness (C*) was in a range of not less than 62 to less than 64.
B: The chromaticness (C*) was in a range of not less than 60 to less than 62.
C: The chromaticness (C*) was less than 60.
NG: The magenta color could not be expressed. Namely, the hue angle of the recording image was not in the range of -40° to 0°.

(b) Evaluation of Chromaticness of Red

An ink set was constructed by combining the water-based ink of each of Examples 1 to 13 and Comparative Examples 1 to 4 with a water-based yellow ink 1 or 2 indicated in TABLE 1. The ink-jet recording apparatus MFC-J6995CDW was used so as to record a plurality of images each by using the ink set of one of Examples 1 to 13 and Comparative Examples 1 to 4 on the recording medium "Hammermill Fore (trade name) Multi-Purpose Paper", with recording duty of 120%, while changing the ratio (MD:YD) of the number of dots (MD) of the water-based magenta ink and the number of dots (YD) of the water-based yellow ink at every 5% in a range of MD:YD = 100:0 to 0:100. Among the plurality of images, an image in which the hue angle was the closest to 25 degrees was made to be an evaluation sample. The values of chromaticness (C*) at 5 (five) locations in the evaluation sample were measured by using the spectrophotometric colorimetry meter "SpectroEye", the average value of the values of chromaticness (C*) at the five locations was obtained, and the chromaticness of red was evaluated based on the following evaluation criterion. Note that in this evaluation, the water-based yellow ink 1 was used in each of Examples 1 to 12 and Comparative Examples 1 to 4, and the water-based yellow ink 2 was used in Example 13. Further, an aqueous pigment dispersion E indicated in TABLE 1 was prepared in a similar manner regarding the aqueous pigment dispersion A except for appropriately changing the kind of pigment, the component ratio and the duration time of dispersing process. Furthermore, in the present invention, the term "hue angle" represents, for example, an angle in the L*a*b* color system chromaticity diagram indicating a* and b* on a plane, and is defined as follows:

when satisfying $a^* \geq$ (not less than) 0, and $b^* \geq 0$ (first quadrant), the hue angle = $\tan^{-1}(b^*/a^*)$;
when satisfying $a^* \leq$ (not more than) 0, and $b^* \geq 0$ (second quadrant), the hue angle = 180 degrees + $\tan^{-1}(b^*/a^*)$;
when satisfying $a^* \leq 0$, and $b^* \leq 0$ (third quadrant), the hue angle = 180 degrees + $\tan^{-1}(b^*/a^*)$; and
when satisfying $a^* \geq 0$, and $b^* \leq 0$ (fourth quadrant), the hue angle = 360 degrees + $\tan^{-1}(b^*/a^*)$.

TABLE 1 (following) - LEGEND

*1: Aqueous dispersion of C.I. Pigment Yellow 74 (mean particle diameter: 110 nm); numeral in the table indicates pigment solid content amount.
*2: Nonionic surfactant (acetylene glycol-based surfactant); produced by AIR PRODUCTS AND CHEMICALS, Inc.; numeral in the table indicates the effective ingredient amount.
*3: Anionic surfactant, manufactured by LION SPECIALTY CHEMICALS CO., LTD.; effective ingredient amount: 28% by mass; numeral in the table indicates effective ingredient amount.

TABLE 1

| | Water-based Yellow Ink | | 1 | 2 |
|---|---|---|---|---|
| Composition (% by mass) | Pigment (Y) | Aqueous pigment dispersion E (*1) | 6 | 9 |
| | Humectant | Glycerol | 8 | 8 |
| | | Triethylene glycol | 8 | 8 |
| | Penetrant | Triethylene glycol-n-butyl ether | 2 | 2 |
| | Surfactant | SURFYNOL (trade name) 440 (*2) | 0.4 | 0.4 |
| | | SUNNOL (trade name) NL 1430 (*3) | 0.4 | 0.4 |
| | Water | | balance | balance |

<Criterion for Evaluation of Chromaticness of Red>

A: The chromaticness (C*) was not less than 58.
B: The chromaticness (C*) was in a range of not less than 56 to less than 58.
C: The chromaticness (C*) was less than 56.

(c) Evaluation of Total of Chromaticness of Magenta and Chromaticness of Red

The total (sum) of the chromaticness (C*) in the above-described (a) Evaluation of chromaticness of magenta and the chromaticness (C*) in (b) Evaluation of chromaticness of Red was evaluated based on the following evaluation criterion.

<Criterion for Evaluation of Total of Chromaticness of Magenta and Chromaticness of Red>

AA: The total (sum) was not less than 125.
A: The total (sum) was in a range of not less than 120 to less than 125.
C: The total (sum) was less than 120.
NG: The magenta color could not be expressed. Namely, the hue angle of the recording image was not in the range of -40° to 0° in (a) Evaluation of chromaticness of magenta.

(d) Evaluation of Chromaticness of Magenta in Each Lightness (Brightness)

The ink-jet recording apparatus MFC-J6995CDW was used so as to record a plurality of images each by using one of the water-based inks of Examples 1 to 13 and Comparative Examples 1 to 4 on the recording medium "Hammermill Fore (trade name) Multi-Purpose Paper", while changing the recording duty at every 5% in a range of 0% to 100%. Among the plurality of images, an image in which the chromaticness (C*) was the closest to 60 was made to be an evaluation sample of a light portion. The values of chromaticness (C*) at 5 (five) locations in the evaluation sample of the light portion were measured by using the spectrophotometric colorimetry meter "SpectroEye", the average value of the values of chromaticness (C*) at the five locations was obtained and made to be the chromaticness (C*) at the light portion. Note that in the present invention, the lightness (brightness) L* is based, for example, on the L*a*b* color system (CIE 1976 (L*a*b*) color system) normalized or standardized by Commission Internationale d'Eclairage (CIE) in 1976 (see, JIS Z 8729).

Further, the ink-jet recording apparatus MFC-J6995CDW was used so as to record a plurality of images each by using one of the water-based inks of Examples 1 to 13 and Comparative Examples 1 to 4 and by using a commercially available water-based black ink (a water-based black ink charged in a black ink cartridge LC3129BK produced by BROTHER INDUSTRIES., LTD.) while changing the ratio (MD:BkD) of the number of dots (MD) of the water-based ink and the number of dots (BkD) of the water-based black ink at every 5% in a range of MD:BkD = 100:0 to 0:100, on the recording medium "Hammermill Fore (trade name) Multi-Purpose Paper", with the recording duty of 120%. Among the plurality of images, an image in which the lightness (L*) was the closest to 50 was made to be an evaluation sample of a dark portion. The values of chromaticness (C*) at 5 (five) locations in the evaluation sample of the dark portion were measured by using the spectrophotometric colorimetry meter "SpectroEye", the average value of the values of chromaticness (C*) at the five locations was obtained and made to be the chromaticness (C*) at the dark portion.

Based on the total (sum) of the chromaticness (C*) in the light portion, the chromaticness (C*) of an evaluation sample in which the lightness (L*) was the closest to 55 and the chromaticness (C*) of the dark portion, the chromaticness of magenta (magenta chromaticness) in each lightness were evaluated in accordance with the following evaluation criterion. Note that the evaluation sample in which the lightness (L*) was the closest to 55 was such an evaluation sample wherein the lightness (L*) of the image was the closest to 55 among the images recorded in a similar manner as in the preparation of the evaluation samples of the light portion; the measurement of the chromaticness (C*) of the evaluation sample in which the lightness (L*) was the closest to 55 was performed also in a similar manner as regarding the chromaticness (C*) in the light portion. Further, the magenta chromaticness means a chromaticness (C*) of the magenta color (hue angle: -40° to 0°).

<Criterion for Evaluation of Chromaticness of Magenta in Each Lightness (Brightness)>

AA: The total (sum) was not less than 175.
A: The total (sum) was in a range of not less than 170 to less than 175.
B: The total (sum) was in a range of not less than 165 to less than 170.
C: The total (sum) was less than 165.
NG: The magenta color could not be expressed. Namely, the hue angle of the evaluation sample was not in the range of -40° to 0°.

(e) Evaluation of Light Resistance

The ink-jet printer MFC-J6995CDW was used to record gradation patches of water-based ink each by using one of the water-based inks of Examples 1 to 13 and Comparative Examples 1 to 4 on dedicated paper "Photo Glossy Paper BP74GA4" produced by BROTHER INDUSTRIES, LTD. Among the gradation patches, a gradation patch in which the initial OD value (optical density value) was 1.0 was used as an evaluation sample. The OD value was measured as follows: the OD values at three locations in the evaluation sample were measured with the spectrophotometer, SpectroEye (light source: $D_{50}$; field: 2 degrees; ANSI-T); and the average value of the OD values measured at the three locations was obtained. Next, by using a super xenon weather meter, SX75, manufactured by SUGA TEST INSTRUMENTS CO., LTD, the evaluation sample was irradiated with a xenon lamp light for 70 (seventy) hours under the condition that the temperature in the chamber was 23°C, the relative humidity in the chamber was 50%, and the illuminance was 81 klx. Then, the optical density (OD value) of the evaluation sample after having been irradiated with the xenon lamp light for 70 hours under the above-described condition was measured in a similar manner as that described above. Next, the OD value decrease rate (%) was determined according to the following equation (I), and the light resistance was evaluated based on the following evaluation criterion. Note that it is possible to determine that as the OD value decrease rate of a certain water-based ink was smaller, the degradation in the image quality was smaller, and thus the certain water-based ink had more excellent light resistance.

$$\text{OD value decrease rate (\%)} = \{(X - Y) / X\} \times 100 \ldots \text{(I)}$$

X: 1.0 (initial OD value)
Y: OD value after being irradiated with xenon lamp light

<Criterion for Evaluation of Light Resistance>

AA: The OD value decrease rate was not more than 5%.
A: The OD value decrease rate exceeded 5% and was not more than 10%.
B: The OD value decrease rate exceeded 10% and was not more than 15%.
C: The OD value decrease rate exceeded 15%.

The water-based ink composition and the results of evaluations of each of the water-based inks of Examples 1 to 13 and Comparative Examples 1 to 4 are indicated in TABLE 2 and TABLE 3.

TABLE 2 (following) - LEGEND

*4: Solid solution of PV19 and PR122 (mean particle diameter: 120 nm); numeral in the table indicates pigment solid content amount.
*5: Aqueous dispersion of PR176 (mean particle diameter: 110 nm); numeral in the table indicates pigment solid content amount.
*2: Nonionic surfactant (acetylene glycol-based surfactant); produced by AIR PRODUCTS AND CHEMICALS, Inc.; numeral in the table indicates the effective ingredient amount.
*3: Anionic surfactant, manufactured by LION SPECIALTY CHEMICALS CO., LTD.; effective ingredient amount: 28% by mass; numeral in the table indicates effective ingredient amount.

The unit in the ink composition in TABLE 2: % by mass

TABLE 2

| | | | EXAMPLES | | | | | | | |
|---|---|---|---|---|---|---|---|---|---|---|
| | | | 1 | 2 | 3 | 4 | 5 | 6 | 7 | 8 |
| Ink composition (% by mass) | Quinacridone pigment (Q) | Aqueous pigment dispersion A (*4) | 3 | 3.6 | 4.2 | 4.8 | 5.4 | 5.7 | 3.2 | 3.6 |
| | Azo pigment (A) | Aqueous pigment dispersion B (*5) | 3 | 2.4 | 1.8 | 1.2 | 0.6 | 0.3 | 0.8 | 0.9 |
| | Humectant | Glycerol | 8 | 8 | 8 | 8 | 8 | 8 | 10 | 9.5 |
| | | Triethylene glycol | 8 | 8 | 8 | 8 | 8 | 8 | 8 | 8 |
| | Penetrant | Triethylene glycol-n-butyl ether | 2 | 2 | 2 | 2 | 2 | 2 | 2 | 2 |
| | Surfactant | SURFYNOL (trade name) 440 (*2) | 0.4 | 0.4 | 0.4 | 0.4 | 0.4 | 0.4 | 0.4 | 0.4 |
| | | SUNNOL (trade name) NL 1430 (*3) | 0.4 | 0.4 | 0.4 | 0.4 | 0.4 | 0.4 | 0.4 | 0.4 |
| | Water | | balance | balance | balance | balance | balance | balance | balance | balance |
| Q : A | | | 50:50 | 60:40 | 70:30 | 80:20 | 90:10 | 95:5 | 80:20 | 80:20 |
| Q + A | | | 6 | 6 | 6 | 6 | 6 | 6 | 4 | 4.5 |
| (a) Chromaticness of Magenta | | | B | A | AA | AA | AA | AA | AA | AA |
| (b) Chromaticness of Red | | | A | A | A | A | A | B | A | A |
| (c) Total of Chromaticness of Magenta and Chromaticness of Red | | | A | A | AA | AA | AA | A | A | A |
| (d) Chromaticness of Magenta in Each Lightness | | | B | A | AA | AA | AA | AA | B | A |
| (e) Light Resistance | | | A | A | A | AA | AA | AA | A | A |

TABLE 2 (continued)

| Ink composition (% by mass) | | EXAMPLES 9 | 10 | 11 | 12 | 13 |
|---|---|---|---|---|---|---|
| Quinacridone pigment (Q) | Aqueous pigment dispersion A (*4) | 4 | 5.6 | 6.4 | 7.2 | 4.8 |
| Azo pigment (A) | Aqueous pigment dispersion B (*5) | 1 | 1.4 | 1.6 | 1.8 | 1.2 |
| Humectant | Glycerol | 9 | 7 | 6 | 5 | 8 |
| | Triethylene glycol | 8 | 8 | 8 | 8 | 8 |
| Penetrant | Triethylene glycol-n-butyl ether | 2 | 2 | 2 | 2 | 2 |
| Surfactant | SURFYNOL (trade name) 440 (*2) | 0.4 | 0.4 | 0.4 | 0.4 | 0.4 |
| | SUNNOL (trade name) NL 1430 (*3) | 0.4 | 0.4 | 0.4 | 0.4 | 0.4 |
| Water | | balance | balance | balance | balance | balance |
| Q : A | | 80:20 | 80:20 | 80:20 | 80:20 | 80:20 |
| Q + A | | 5 | 7 | 8 | 9 | 6 |
| (a) Chromaticness of Magenta | | AA | AA | AA | AA | AA |
| (b) Chromaticness of Red | | A | A | A | A | B |
| (c) Total of Chromaticness of Magenta and Chromaticness of Red | | AA | AA | AA | A | A |
| (d) Chromaticness of Magenta in Each Lightness | | AA | AA | AA | A | AA |
| (e) Light Resistance | | A | AA | AA | AA | AA |

TABLE 3 (following) - LEGEND

*4: Solid solution of PV19 and PR122 (mean particle diameter: 120 nm); numeral in the table indicates pigment solid content amount.
*6: Aqueous dispersion of PR122 (mean particle diameter: 120 nm); numeral in the table indicates pigment solid content amount.
*7: Aqueous dispersion of PV19 (mean particle diameter: 120 nm); numeral in the table indicates pigment solid content amount.
*5: Aqueous dispersion of PR176 (mean particle diameter: 110 nm); numeral in the table indicates pigment solid content amount.
*2: Nonionic surfactant (acetylene glycol-based surfactant); produced by AIR PRODUCTS AND CHEMICALS, Inc.;

numeral in the table indicates the effective ingredient amount.
*3: Anionic surfactant, manufactured by LION SPECIALTY CHEMICALS CO., LTD.; effective ingredient amount: 28% by mass; numeral in the table indicates effective ingredient amount.

The unit in the ink composition in TABLE 3: % by mass

TABLE 3

| | | | COMPARATIVE EXAMPLES | | | |
|---|---|---|---|---|---|---|
| | | | 1 | 2 | 3 | 4 |
| Ink composition (% by mass) | Quinacridone pigment (Q) | Aqueous pigment dispersion A (*4) | 6 | - | - | - |
| | | Aqueous pigment dispersion C (*6) | - | - | 4.8 | - |
| | | Aqueous pigment dispersion D (*7) | - | - | - | 4.8 |
| | Azo pigment (A) | Aqueous pigment dispersion B (*5) | - | 6 | 1.2 | 1.2 |
| | Humectant | Glycerol | 8 | 8 | 8 | 8 |
| | | Triethylene glycol | 8 | 8 | 8 | 8 |
| | Penetrant | Triethylene glycol-n-butyl ether | 2 | 2 | 2 | 2 |
| | Surfactant | SURFYNOL (trade name) 440 (*2) | 0.4 | 0.4 | 0.4 | 0.4 |
| | | SUNNOL (trade name) NL 1430 (*3) | 0.4 | 0.4 | 0.4 | 0.4 |
| | Water | | balance | balance | balance | balance |
| Q : A | | | 100:0 | 0:100 | 80:20 | 80:20 |
| Q + A | | | 6 | 6 | 6 | 6 |
| (a) Chromaticness of Magenta | | | AA | NG | A | C |
| (b) Chromaticness of Red | | | C | A | B | A |
| (c) Total of Chromaticness of Magenta and Chromaticness of Red | | | A | NG | C | C |
| (d) Chromaticness of Magenta in Each Lightness | | | AA | NG | B | C |
| (e) Light Resistance | | | AA | B | A | A |

As indicated in TABLE 2, in Examples 1 to 13, the evaluation results were satisfactory in relation to all of (a) Evaluation of Chromaticness of Magenta, (b) Evaluation of Chromaticness of Red, (c) Evaluation of Total of Chromaticness of Magenta and Chromaticness of Red, (d) Evaluation of Chromaticness of Magenta in each lightness (brightness), and (e) Evaluation of Light Resistance. In Examples 1 to 13, since the evaluation results were satisfactory in relation to (a) Evaluation of Chromaticness of Magenta, (b) Evaluation of Chromaticness of Red and, (c) Evaluation of Total of Chromaticness of Magenta and Chromaticness of Red, it was possible to confirm that in Examples 1 to 13, the color gamut, of the image formed by using the water-based ink or the water-based ink set was located at a position at which the chromaticness was high (the position separated away from the origin in the a*-b* plane). Namely, it was possible to confirm that, in Examples 1 to 13, the color gamut in the region from magenta to red was satisfactory. Further, in Examples 1 to 13, since (d) the chromaticness of Magenta in each lightness (brightness) was satisfactory, it was possible to confirm that, in Examples 1 to 13, in the region of magenta, the color gamut of the image having a high lightness (L*) and the color gamut of the image having a low lightness (L*) formed by using the water-based ink were both located at positions, respectively, at each of which the chromaticness was high (a position separate and away from the origin in the a*-b* plane). Namely, it was possible to confirm that, in Examples 1 to 13, the balance in the color gamut from the light portion to the dark portion in the

chromaticness of magenta was satisfactory.

Comparison will be made regarding Examples 1 to 6 which had similar condition to one another except that "Q:A" was changed to be mutually different. Examples 2 to 5 in each of which Q:A was made to be in a range of Q:A = 90:10 to 60:40 were further excellent in the balance of (a) the chromaticness of magenta and (b) the chromaticness of red, as compared with Examples 1 and 6 in each of which Q:A was made to be Q:A = 50:50 or 95:5. Namely, in Examples 2 to 5, the chromaticness of magenta and the chromaticness of red were both high. Further, Examples 3 to 5, in each of which Q:A was made to be in a range of Q:A = 90:10 to 70:30, had a further excellent result in (a) the evaluation of Chromaticness of Magenta, as compared with Example 2 in which Q:A was made to be Q:A = 60:40.

Furthermore, Examples 4 and Examples 8 to 12, in each of which Q+A was made to be in a range of Q+A = 4.5% by mass to 9% by mass, had a further excellent result in (d) the evaluation of Chromaticness of Magenta per each Lightness, as compared with Example 7 in which Q+A was made to be Q+A = 4% by mass. Moreover, Examples 4 and Examples 9 to 11, in each of which Q+A was made to be in a range of Q+A = 5% by mass to 8% by mass, had further excellent results in (c) Evaluation of Total of Chromaticness of Magenta and Chromaticness of Red and in the (d) the evaluation of Chromaticness of Magenta per each Lightness, as compared with Examples 8 and 12 in each of which Q+A was made to be Q+A = 4.5% by mass or 9% by mass. Further, Examples 4, 10 and 11, in each of which Q+A was made to be in a range of Q+A = 6% by mass to 8% by mass, had a further excellent result in (e) the evaluation of Light Resistance, as compared with Example 9 in which Q+A was made to be Q+A = 5% by mass.

Comparison will be made regarding Examples 4 and 13 which had similar conditions to each other except that, in (b) Evaluation of Chromaticness of Red, the content amount (Y) of the yellow pigment in the entire amount of the water-based yellow ink was changed to be mutually different. Example 4 in which $Y \leq (Q+A)+2$ was satisfied had a further excellent result in (b) the evaluation of Chromaticness of Red, as compared with Example 13 in which $Y > (Q+A)+2$ was satisfied (Example 4: Y = 6, (Q+A)+2 = 8; Example 13: Y = 9, (Q+A)+2 =8).

On the other hand, as indicated in TABLE 3, Comparative Example 1 which did not use the azo pigment had a unsatisfactory result in (b) the evaluation of Chromaticness of Red. Further, Comparative Example 2 which did not use the quinacridone pigment could not express the magenta color in (a) the evaluation of Chromaticness of Magenta, in (c) the evaluation of the total of the chromaticness of magenta and the chromaticness of red, and in (d) the evaluation of Chromaticness of Magenta per each Lightness. Furthermore, Comparative Example 3 which used, as the quinacridone pigment, the PR122 rather than using the solid solution of PV19 and PR122 had unsatisfactory results in (c) the evaluation of the total of the chromaticness of magenta and the chromaticness of red. Moreover, Comparative Example 4 which used, as the quinacridone pigment, the PV19 rather than using the solid solution of PV19 and PR122 had unsatisfactory results in (a) the evaluation of Chromaticness of Magenta, in (c) the evaluation of the total of the chromaticness of magenta and the chromaticness of red, and in (d) the evaluation of Chromaticness of Magenta per each Lightness.

[Industrial Applicability]

As described above, the water-based ink related to the present invention is satisfactory in all the color gamut (color range) in the region from magenta to red, the balance in the color gamut from a light portion to a dark portion in the chromaticness of magenta, and the light resistance. The water-based ink related to the present invention is widely applicable, for example, to a variety of kinds of the ink-jet recording, as a water-based magenta ink for ink-jet recording.

[Reference Signs List]

1 ink-jet recording apparatus
2 ink cartridges
3 ink discharging mechanism (ink-jet head)
4 head unit
5 carriage
6 driving unit
7 platen roller
8 purge device

**Claims**

1. A water-based ink for ink-jet recording comprising:

a solid solution of a quinacridone pigment including C.I. Pigment Violet 19 and C.I. Pigment Red 122;

an azo pigment including C.I. Pigment Red 176; and
water,
wherein the mass ratio (Q:A) of the content amount (Q) of the solid solution of the quinacridone pigment to the content amount (A) of the azo pigment in the entire amount of the water-based ink is in a range of 90: 10 to 60:40,
**characterized in that**
the total (Q+A) of the content amount (Q) of the solid solution of the quinacridone pigment and the content amount (A) of the azo pigment in the entire amount of the water-based ink is in a range of 4.5% by mass to 9% by mass.

2. The water-based ink for ink-jet recording according to claim 1, wherein the mass ratio (Q:A) of the content amount (Q) of the solid solution of the quinacridone pigment to the content amount (A) of the azo pigment in the entire amount of the water-based ink is in a range of 90: 10 to 70:30.

3. The water-based ink for ink-jet recording according to claim 1 or 2, wherein the total (Q+A) of the content amount (Q) of the solid solution of the quinacridone pigment and the content amount (A) of the azo pigment in the entire amount of the water-based ink is in a range of 5% by mass to 8% by mass.

4. The water-based ink for ink-jet recording according to claim 3, wherein the total (Q+A) of the content amount (Q) of the solid solution of the quinacridone pigment and the content amount (A) of the azo pigment in the entire amount of the water-based ink is in a range of 6% by mass to 8% by mass.

5. The water-based ink for ink-jet recording according to any one of claims 1 to 4, wherein mean particle diameter of the solid solution of the quinacridone pigment is greater than mean particle diameter of the azo pigment.

6. The water-based ink for ink-jet recording according to any one of claims 1 to 5, further comprising an acetylene glycol-based surfactant,
wherein a ratio of a content of the acetylenic glycol-based surfactant to a total of 100 parts by mass of a content of the solid solution of the quinacridone pigment and a content of the azo pigment is not less than 4 parts by mass.

7. The water-based ink for ink-jet recording according to any one of claims 1 to 6, further comprising a quinacridone pigment which is different from the solid solution.

8. An ink set comprising:

a water-based magenta ink for ink-jet recording which is the water-based ink for ink-jet recording as defined in any one of claims 1 to 7; and
a water-based yellow ink for ink-jet recording which includes a yellow pigment and water.

9. The ink set according to claim 8, further satisfying the following conditional expression:

$$Y \leq (Q + A) + 2$$

wherein in the conditional expression,
Y: a content amount (% by mass) of the yellow pigment in an entire amount of the water-based yellow ink; and
Q+A: a total (% by mass) of a content amount (Q) of the solid solution of the quinacridone pigment and a content amount (A) of the azo pigment in an entire amount of the water-based magenta ink.

10. The ink set according to claim 8 or 9, wherein the yellow pigment is C.I. Pigment Yellow 74.

**Patentansprüche**

1. Wasserbasierte Tinte zum Tintenstrahldrucken, umfassend:

eine Feststofflösung eines Chinacridonpigments, die C.I. Pigment Violet 19 und C.I. Pigment Red 122 enthält;
ein Azopigment, das C.I. Pigment Red 176 enthält; und
Wasser,
wobei das Massenverhältnis (Q:A) der Gehaltsmenge (Q) der Feststofflösung des Chinacridonpigments zu der

Gehaltsmenge (A) des Azopigments in der Gesamtmenge der wasserbasierten Tinte in einem Bereich von 90:10 bis 60:40 liegt,

**dadurch gekennzeichnet, dass**

die Summe (Q+A) der Gehaltsmenge (Q) der Feststofflösung des Chinacridonpigments und der Gehaltsmenge (A) des Azopigments in der Gesamtmenge der wasserbasierten Tinte in einem Bereich von 4,5 Massen-% bis 9 Massen-% liegt.

**2.** Wasserbasierte Tinte zum Tintenstrahldrucken gemäß Anspruch 1, wobei das Massenverhältnis (Q:A) der Gehaltsmenge (Q) der Feststofflösung des Chinacridonpigments zu der Gehaltsmenge (A) des Azopigments in der Gesamtmenge der wasserbasierten Tinte in einem Bereich von 90:10 bis 70:30 liegt.

**3.** Wasserbasierte Tinte zum Tintenstrahldrucken gemäß Anspruch 1 oder 2, wobei die Summe (Q+A) der Gehaltsmenge (Q) der Feststofflösung des Chinacridonpigments und der Gehaltsmenge (A) des Azopigments in der Gesamtmenge der wasserbasierten Tinte in einem Bereich von 5 Massen-% bis 8 Massen-% liegt.

**4.** Wasserbasierte Tinte zum Tintenstrahldrucken gemäß Anspruch 3, wobei die Summe (Q+A) der Gehaltsmenge (Q) der Feststofflösung des Chinacridonpigments und der Gehaltsmenge (A) des Azopigments in der Gesamtmenge der wasserbasierten Tinte in einem Bereich von 6 Massen-% bis 8 Massen-% liegt.

**5.** Wasserbasierte Tinte zum Tintenstrahldrucken gemäß einem der Ansprüche 1 bis 4, wobei der mittlere Teilchendurchmesser der Feststofflösung des Chinacridonpigments größer als der mittlere Teilchendurchmesser des Azopigments ist.

**6.** Wasserbasierte Tinte zum Tintenstrahldrucken gemäß einem der Ansprüche 1 bis 5, ferner enthaltend ein oberflächenaktives Mittel auf Acetylenglycolbasis,
wobei ein Verhältnis eines Gehalts des oberflächenaktiven Mittels auf Acetylenglycolbasis zu einer Summe von 100 Massenteilen eines Gehalts der Feststofflösung des Chinacridonpigments und eines Gehalts des Azopigments nicht weniger als 4 Massenteile beträgt.

**7.** Wasserbasierte Tinte zum Tintenstrahldrucken gemäß einem der Ansprüche 1 bis 6, ferner enthaltend ein Chinacridonpigment, das sich von der Feststofflösung unterscheidet.

**8.** Tintenset, umfassend:

eine wasserbasierte magentafarbene Tinte zum Tintenstrahldrucken, bei der es sich um die wasserbasierte Tinte zum Tintenstrahldrucken gemäß einem der Ansprüche 1 bis 7 handelt; und
eine wasserbasierte gelbe Tinte zum Tintenstrahldrucken, die ein gelbes Pigment und Wasser enthält.

**9.** Tintenset gemäß Anspruch 8, das ferner den folgenden Bedingungsausdruck erfüllt:

$$Y \leq (Q + A) + 2$$

wobei in dem Bedingungsausdruck
Y: eine Gehaltsmenge (Massen-%) des gelben Pigments in einer Gesamtmenge der wasserbasierten gelben Tinte; und
Q+A: eine Summe (Massen-%) einer Gehaltsmenge (Q) der Feststofflösung des Chinacridonpigments und einer Gehaltsmenge (A) des Azopigments in einer Gesamtmenge der wasserbasierten magentafarbenen Tinte.

**10.** Tintenset gemäß Anspruch 8 oder 9, wobei das gelbe Pigment C.I. Pigment Yellow 74 ist.

## Revendications

**1.** Encre à base d’eau pour enregistrement par jet d’encre comprenant :

une solution solide d’un pigment de quinacridone comprenant C.I. Pigment Violet 19 et C.I. Pigment Red 122 ;
un pigment azoïque comprenant C.I. Pigment Red 176 ; et

de l'eau,
où le rapport en masse (Q:A) de la quantité de teneur (Q) de la solution solide du pigment de quinacridone à la quantité de teneur (A) du pigment azoïque dans la quantité totale de l'encre à base d'eau est dans une plage de 90:10 à 60:40, **caractérisée en ce que**
le total (Q+A) de la quantité de teneur (Q) de la solution solide du pigment de quinacridone et de la quantité de teneur (A) du pigment azoïque dans la quantité totale de l'encre à base d'eau est dans une plage de 4,5 % en masse à 9 % en masse.

**2.** Encre à base d'eau pour enregistrement par jet d'encre selon la revendication 1, où le rapport en masse (Q:A) de la quantité de teneur (Q) de la solution solide du pigment de quinacridone à la quantité de teneur (A) du pigment azoïque dans la quantité totale de l'encre à base d'eau est dans une plage de 90:10 à 70:30.

**3.** Encre à base d'eau pour enregistrement par jet d'encre selon la revendication 1 ou 2, où le total (Q+A) de la quantité de teneur (Q) de la solution solide du pigment de quinacridone et de la quantité de teneur (A) du pigment azoïque dans la quantité totale de l'encre à base d'eau est dans une plage de 5 % en masse à 8 % en masse.

**4.** Encre à base d'eau pour enregistrement par jet d'encre selon la revendication 3, où le total (Q+A) de la quantité de teneur (Q) de la solution solide du pigment de quinacridone et de la quantité de teneur (A) du pigment azoïque dans la quantité totale de l'encre à base d'eau est dans une plage de 6 % en masse à 8 % en masse.

**5.** Encre à base d'eau pour enregistrement par jet d'encre selon l'une quelconque des revendications 1 à 4, où le diamètre de particule moyen de la solution solide du pigment de quinacridone est plus grand que le diamètre de particule moyen du pigment azoïque.

**6.** Encre à base d'eau pour enregistrement par jet d'encre selon l'une quelconque des revendications 1 à 5, comprenant en outre un tensioactif à base d'acétylène glycol,
où un rapport d'une teneur du tensioactif à base d'acétylène glycol à un total de 100 parties en masse d'une teneur de la solution solide du pigment de quinacridone et d'une teneur du pigment azoïque n'est pas inférieur à 4 parties en masse.

**7.** Encre à base d'eau pour enregistrement par jet d'encre selon l'une quelconque des revendications 1 à 6, comprenant en outre un pigment de quinacridone qui est différent de la solution solide.

**8.** Jeu d'encres comprenant :

une encre magenta à base d'eau pour enregistrement par jet d'encre qui est l'encre à base d'eau pour enregistrement par jet d'encre telle que définie dans l'une quelconque des revendications 1 à 7 ; et
une encre jaune à base d'eau pour enregistrement par jet d'encre qui comprend un pigment jaune et de l'eau.

**9.** Jeu d'encres selon la revendication 8, satisfaisant en outre l'expression conditionnelle suivante :

$$Y \leq (Q + A) + 2$$

où dans l'expression conditionnelle,
Y : une quantité de teneur (% en masse) du pigment jaune dans une quantité totale de l'encre jaune à base d'eau ; et
Q+A : un total (% en masse) d'une quantité de teneur (Q) de la solution solide du pigment de quinacridone et d'une quantité de teneur (A) du pigment azoïque dans une quantité totale de l'encre magenta à base d'eau.

**10.** Jeu d'encres selon la revendication 8 ou 9, dans lequel le pigment jaune est C.I. Pigment Yellow 74.

[Fig. 1]

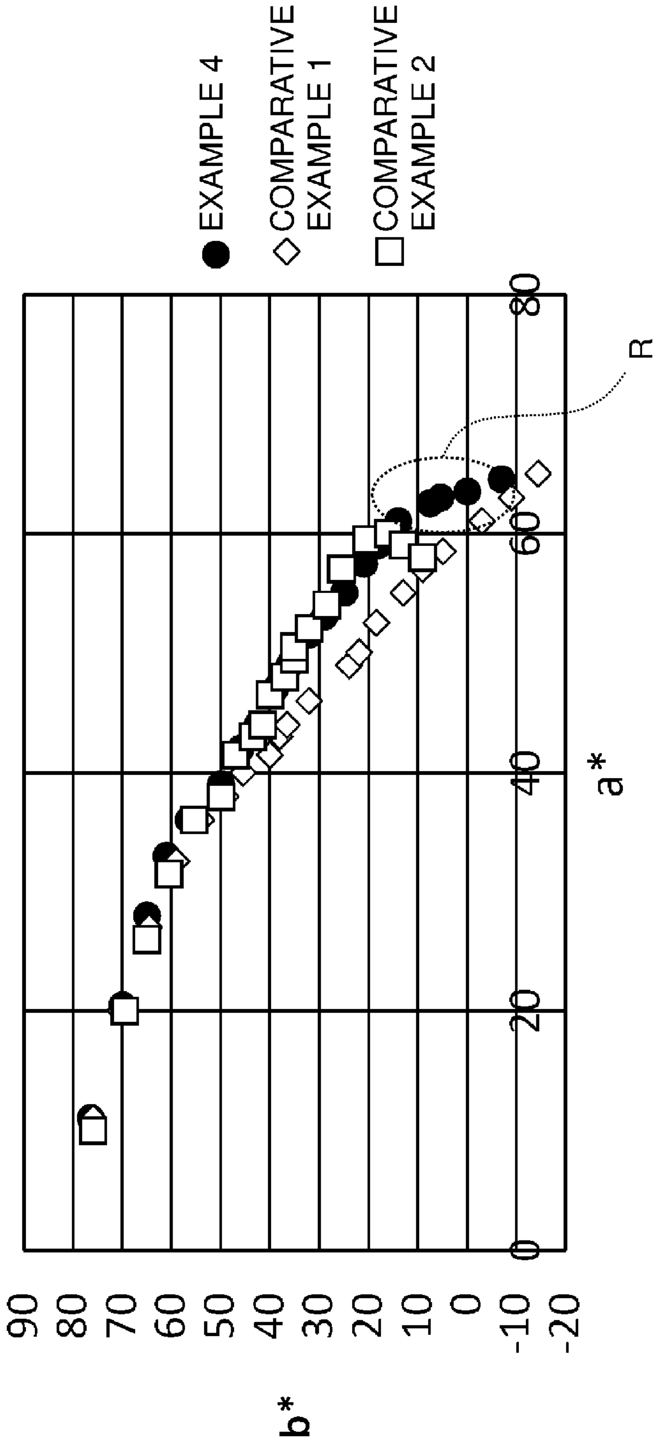
EXAMPLE 4
COMPARATIVE EXAMPLE 1
COMPARATIVE EXAMPLE 2
R
a*
b*
0
20
40
60
80
90
70
50
30
10
-10
-20

[Fig. 2]

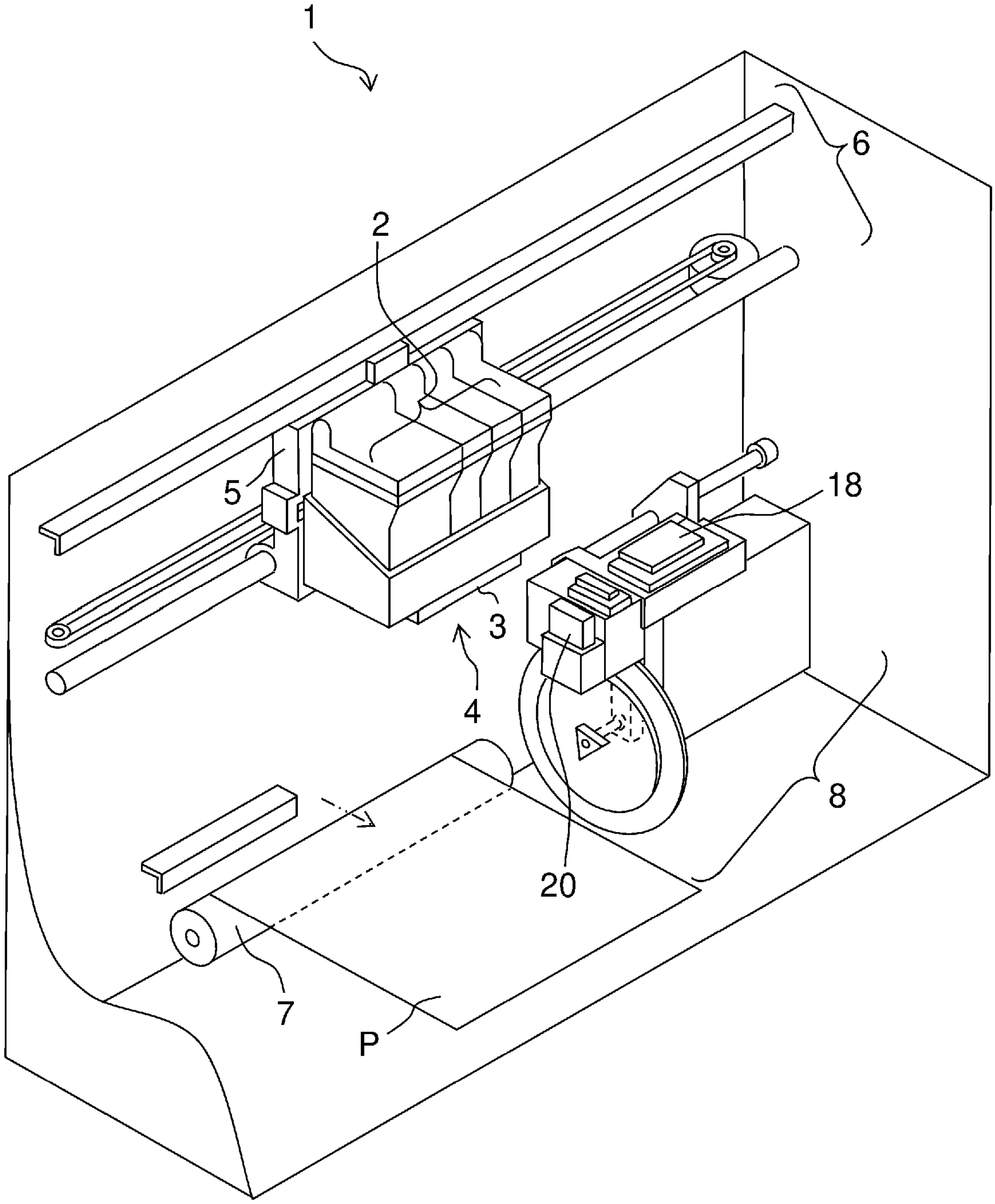

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015187143 A1
- JP 2018150515 A
- JP 2008246821 A
- US 20080241398 A1